(19) Europäisches Patentamt

European Patent Office

Office européen des brevets

(11) **EP 0 936 575 B1**

(12) **FASCICULE DE BREVET EUROPEEN**

(45) Date de publication et mention
de la délivrance du brevet:
**28.07.2004 Bulletin 2004/31**

(51) Int Cl.7: **G06T 7/20**

(21) Numéro de dépôt: **99200360.8**

(22) Date de dépôt: **08.02.1999**

(54) **Procédé de traitement d'images pour l'estimation de mouvement dans une séquence d'images**

Bildbearbeitungsverfahren zur Bewegungsschätzung in einer Bildsequenz

Image processing method for motion estimation in a sequence of images

(84) Etats contractants désignés:
**DE FR GB NL**

(30) Priorité: **17.02.1998 FR 9801906**

(43) Date de publication de la demande:
**18.08.1999 Bulletin 1999/33**

(73) Titulaire: **Koninklijke Philips Electronics N.V.**
**5621 BA Eindhoven (NL)**

(72) Inventeurs:
• **Florent, Raoul**
**75008 Paris (FR)**
• **Gatepin, Philippe**
**75008 Paris (FR)**

(74) Mandataire: **Lottin, Claudine**
**Société Civile SPID,**
**156, Boulevard Haussmann**
**75008 Paris (FR)**

(56) Documents cités:
**EP-A- 0 780 795**     **WO-A-95/07591**
**US-A- 5 337 231**

• **NEMOUCHI Y ET AL: "A REFERENCE DATA ORIENTED APPROACH FOR IMPLEMENTING A MULTIRESOLUTION BLOCK-MATCHING ALGORITHM" INTERNAT. SYMP. ON CIRCUITS AND SYSTEMS (ISCAS), ATLANTA, MAY 12 - 15, 1996, vol. 4, 12 mai 1996, pages 249-252, XP000704583 IEEE**
• **KERDRANVAT M: "HIERARCHICAL MOTION ESTIMATION AND MOTION INFORMATION ENCODING" SIGNAL PROCESSING OF HDTV, 2, TURIN, AUG. 30 - SEPT. 1, 1989, no. 3, 30 août 1989, pages 101-108, XP000215230 CHIARIGLIONE L**
• **SANG-YEON KIM ET AL: "A SYSTOLIC REALIZATION OF SUMMETRIC BLOCK MATCHING ALGORITHM FOR HD-MAC SYSTEM" IEEE TRANSACTIONS ON CONSUMER ELECTRONICS, vol. 39, no. 3, 1 août 1993, pages 277-283, XP000396292**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

L'invention concerne un procédé de traitement d'images pour l'estimation du mouvement d'objets représentés dans une séquence d'images bruitées, ainsi qu'un procédé de filtrage du bruit incluant ce procédé d'estimation de mouvement.

L'invention concerne également un appareil d'imagerie médicale mettant en oeuvre le procédé d'estimation de mouvement et/ou le procédé de filtrage du bruit, et en particulier un appareil à rayons X. Dans une application particulière, cet appareil à rayons X travaille en mode fluoroscopique pour la visualisation du système vasculaire.

Le document WO95/07591 ou PCT/EP94/02870 décrit un procédé d'estimation de mouvement incluant une technique de "block matching" dans une fenêtre (SW) qui a une dimension prédéterminée. Dans ce procédé, un block de pixels (IFB) de l'image courante (IF) est appairé avec un block candidat (CPBB) d'une fenêtre de recherche (BSW) dans l'image antérieure (BF) et avec un block correspondant (CPBF) dans une fenêtre de recherche correspondante ((FSW) dans l'image ultérieure (FF). Les deux fenêtres de recherche ont leur dimension qui est moitié de celle de ladite dimension prédéterminée.

Ce procédé comprend l'estimation d'un vecteur de mouvement dont une première partie (BHMV) correspond à la localisation du meilleur block de l'image antérieure et dont une seconde partie (BHMV) correspond à la localisation du meilleur block de l'image ultérieure.

Donc, cette technique comprend la détermination d'un seul et unique vecteur de mouvement qui fait correspondre l'image ultérieure à l'image antérieure. Ceci est illustré par la FIG.4 de D1, en référence à la description page 2, dernier paragraphe de D1 et page 3, premier paragraphe. Le vecteur de mouvement déterminé fait correspondre les points des blocks candidats au même point du block à interpoler.

Un procédé de traitement d'images pour estimer le mouvement d'objets dans une séquence d'images bruitées est déjà connu de la publication intitulée " ROBUST BLOCK-MATCHING MOTION-ESTIMATION TECHNIQUE FOR NOISY SOURCES " PAR Robert M. ARMITANO et alii dans " 1997 IEEE, International Conference on Acoustics, Speech, and Signal-Processing, vol.IV, pp.2685-2688 "

Pour la mise en oeuvre du procédé décrit dans cette publication, une séquence d'images est acquise jusqu'à un instant t. L'image traitée à l'instant t est la dernière image arrivée. Elle est divisée en blocs jointifs référencés par leurs coordonnées, parmi lesquels un bloc courant est examiné. Dans l'image précédente à instant t-1, un bloc de mêmes coordonnées est déterminé et une fenêtre de recherche dont les dimensions sont liées à l'amplitude présumée du mouvement est formée autour de ce bloc. Le but de ce procédé basé sur un algorithme appelé B.M.A ( de l'anglais Block Matching Algorithm ) est de déterminer dans la fenêtre de recherche un bloc appelé bloc correspondant au bloc courant qui est celui qui, selon un critère prédéterminé de similarité d'intensité, a les propriétés de luminosité les plus proches de celles du bloc courant. La détermination du bloc correspondant fournit un vecteur de mouvement qui mesure la translation spatiale entre le bloc courant dans l'image à l'instant t et le bloc correspondant dans l'image précédente à l'instant t-1.

Ce procédé d'estimation de mouvement comprend une estimation d'un vecteur de mouvement grossier pour fournir une localisation approximative du bloc correspondant, suivie de l'application du critère de similarité d'intensité pour estimer un vecteur de mouvement réel autour du vecteur de mouvement grossier. Le critère de similarité n'est pas décrit.

L'estimation du vecteur de mouvement grossier comprend une détermination d'une pluralité de p vecteurs de mouvements relatifs à des blocs correspondants situés respectivement dans un nombre identique p d'images temporelles successives antérieures à l'image traitée à l'instant t qui contient le bloc courant, et un filtrage temporel linéaire qui fournit ledit vecteur de mouvement grossier comme une moyenne pondérée des p vecteurs de mouvements antérieurs. Ce filtrage temporel linéaire des p vecteurs de mouvement antérieurs est du type prédictif, c'est-à-dire que, connaissant p vecteurs de mouvements antérieurs relatifs à p blocs correspondants prélevés dans des images antérieures, une prédiction du vecteur de mouvement grossier entre les instants t et t-1 est réalisée basée sur une hypothèse spécifique que le mouvement estimé sur les p blocs antérieurs correspondants successifs est strictement linéaire et continu. Le critère de similarité est ensuite appliqué localement autour du vecteur grossier pour estimer le vecteur de mouvement réel.

Du fait que ce procédé implique cette étape de prédiction, il perd son efficacité toutes les fois qu'un nouveau mouvement apparaît, car, dans ce cas, le vecteur de mouvement grossier ne peut pas être déterminé puisque les p vecteurs de mouvement précédents n'existent pas. Et donc le vecteur réel basé sur le vecteur grossier ne peut pas non plus être trouvé localement.

Un problème signalé dans la publication citée est que ce procédé d'estimation de mouvement suit difficilement des objets en mouvement dans la séquence d'images lorsque les images sont bruitées au-delà d'un certain niveau, spécialement parce ce procédé utilise l'algorithme de recherche des blocs correspondant (B.M.A) dans une pluralité d'images du passé. Dans une telle séquence, les objets paraissent changer d'une image à l'autre à cause du bruit et non pas nécessairement comme le résultat du mouvement. En outre ce procédé nécessite un temps de calcul d'un coût énorme.

Un autre problème est que, tel que connu de l'homme du métier, les meilleurs procédés de réduction du bruit dans une séquence d'images sont des procédés récursifs de filtrage temporel du bruit. Mais ces procédés récursifs de filtrage temporel du bruit se comportent assez mal en cas de mouvement. En général, la seule solution pour utiliser de tels filtres récursifs temporels en cas de mouvement est de diminuer de manière importante leur facteur de débruitage ce qui engendre des effets nocifs appelés de sortie de bruit (en anglais NOISE BREAK THROUGH) ou bien un effet de flou (en anglais BLURRING) de telle sorte que le filtrage temporel peut effacer les petits objets ou les fins détails d'objet en mouvement.

Un but de l'invention est de fournir un procédé d'estimation de mouvement servant en particulier à aider un filtre temporel, ou spatio-temporel pour un débruitage efficace en cas de mouvement.

Ce but est atteint et les problèmes cités sont résolus au moyen d'un procédé de traitement d'images pour l'estimation de mouvement dans une séquence d'images bruitées, selon la revendication 1.

Un procédé de traitement d'image pour la réduction du bruit dans une séquence d'images comprend un agencement d'un filtrage temporel récursif et d'un tel procédé pour l'estimation de mouvement

Un appareil d'imagerie médicale comprend un système d'acquisition d'une séquence d'images, et un système de traitement d'image qui a accès aux données des images et à un système d'affichage des images de la séquence et qui comprend un processeur mettant en oeuvre un tel procédé de traitement d'image pour la réduction du bruit.

L'invention est décrite ci-après en détail, en référence aux figures schématiques annexées, dont la liste est la suivante:

La FIG.1 qui représente sous forme de blocs fonctionnels les étapes du procédé d'estimation de mouvement;
la FIG.2 qui représente sous forme de blocs fonctionnels les étapes d'une variante du procédé de la FIG.1;
les FIGs.3A et 3B qui représentent deux agencements d'un procédé d'estimation de mouvement et d'un procédé de filtrage temporel du bruit ;
la FIG.4 qui illustre l'acquisition d'une séquence de trois images temporelles ;
la FIG.5A qui illustre la détermination de deux fenêtres de recherche et la FIG.5B qui illustre la détermination de deux vecteurs de mouvement dans une séquence de 3 images ;
la FIG.6 qui illustre la décomposition des 3 images de la séquence d'images en chacune 3 niveaux pour former 3 pyramides d'images ;
les FIGS.7A, 7B, 7C, 7D qui représentent respectivement un signal temporel bruité avec mouvement, un signal temporel bruité avec un pic de bruit, un signal temporel filtré du bruit avec mouvement et un signal temporel compensé en mouvement et filtré du bruit ;
la FIG.8 qui montre un appareil d'imagerie à rayons X.

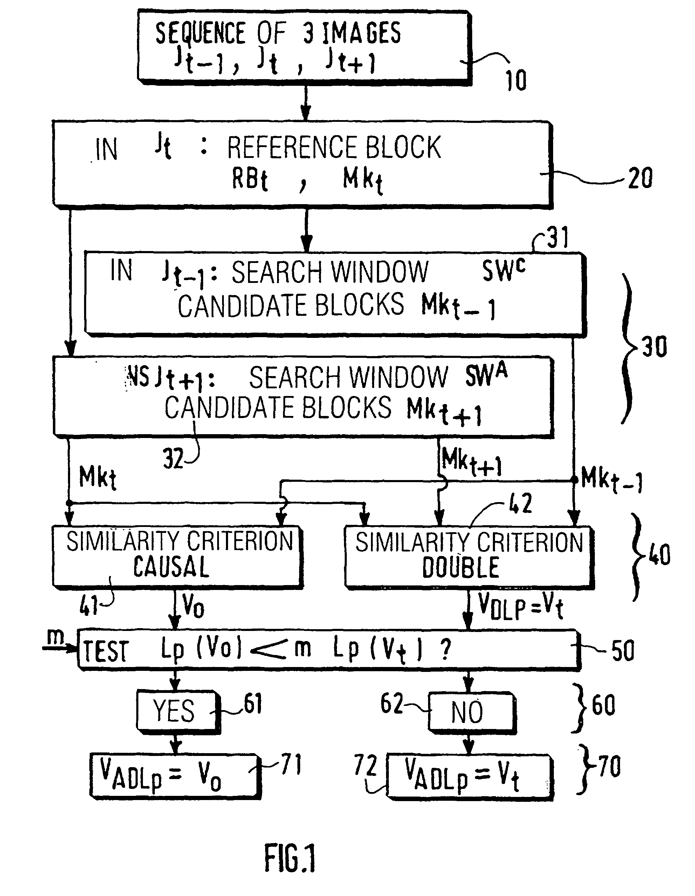

L'invention concerne un procédé de traitement d'une séquence d'images bruitées représentant des objets ayant des mouvements qui s'effectuent sur une zone substantiellement grande par rapport à la dimension d'une image, ou de grande amplitude d'une image à l'autre. Par grande amplitude on entend des mouvements de l'ordre de ou supérieurs à 10 pixels. Ce procédé présente des étapes illustrées par les blocs fonctionnels de la FIG.1.

Un domaine d'application peut être la réduction du bruit dans des images vidéo, en particulier des images qui doivent être codées, car le codage des images bruitées est coûteux. Un autre domaine d'application est celui de la réduction du bruit dans des images médicales, en particulier les images fournies par les appareils de radiologie à rayons X travaillant en mode fluoroscopique. Ces appareils fournissent, à des cadences de l'ordre de 3 à 25 images par seconde, des séquences d'images très bruitées du fait qu'elles sont formées à l'aide de très faibles doses de rayons X. Ces séquences d'images fluoroscopiques sont fréquemment utilisées pour suivre des gestes opératoires en direct et donc doivent être débruitées en temps réel. De plus, ces séquences d'images comprennent de très fins objets en mouvement, tels qu'un cathéter par exemple, qui ne doivent pas être effacés par le traitement d'images. Par fins détails ou fins objets on entend des objets de diamètre de l'ordre de ou inférieurs à 10 pixels.

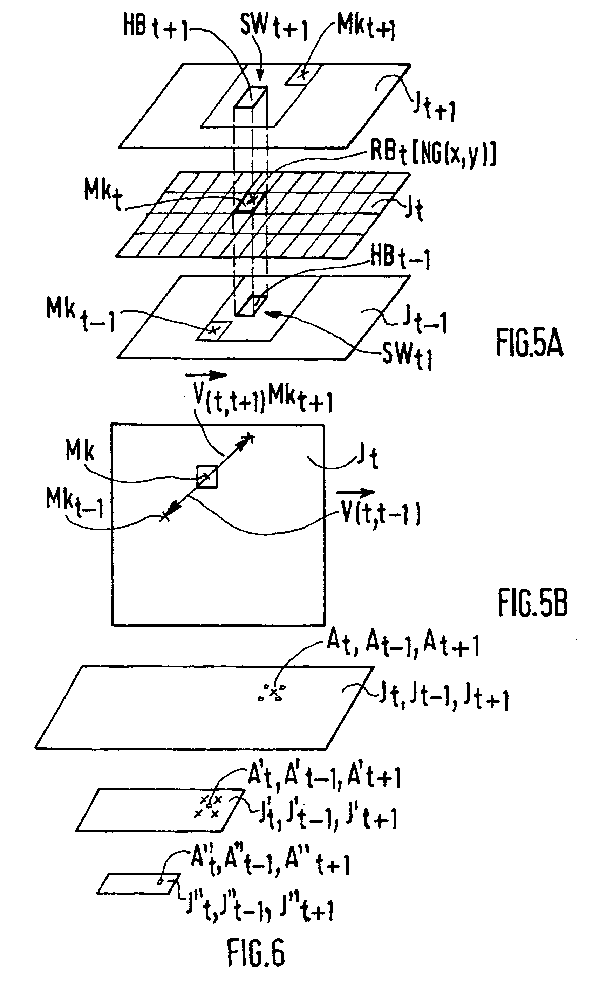

Le procédé d'estimation de mouvement comprend une étape 10 d'acquisition et de numérisation d'une séquence d'images comprenant une image à traiter notée $J_t$, une image précédente appelée causale notée $J_{t-1}$ et une image suivante appelée anti-causale notée $J_{t+1}$. En référence à la FIG.4, chaque image numérisée bruitée $J_t$, $J_{t-1}$, $J_{t+1}$, est une matrice spatiale bidimensionnelle de pixels repérés par des coordonnées x, y, qui sont notés respectivement $A_t$, $A_{t-1}$, $A_{t+1}$ dans les trois images temporelles et qui ont respectivement un niveau d'intensité numérisé $I_t(x,y)$, $I_{t-1}(x, y)$, $I_{t+1}(x,y)$. Pour la simplicité des notations on indique directement les intensités par $I_t$, $I_{t-1}$, $I_{t+1}$.

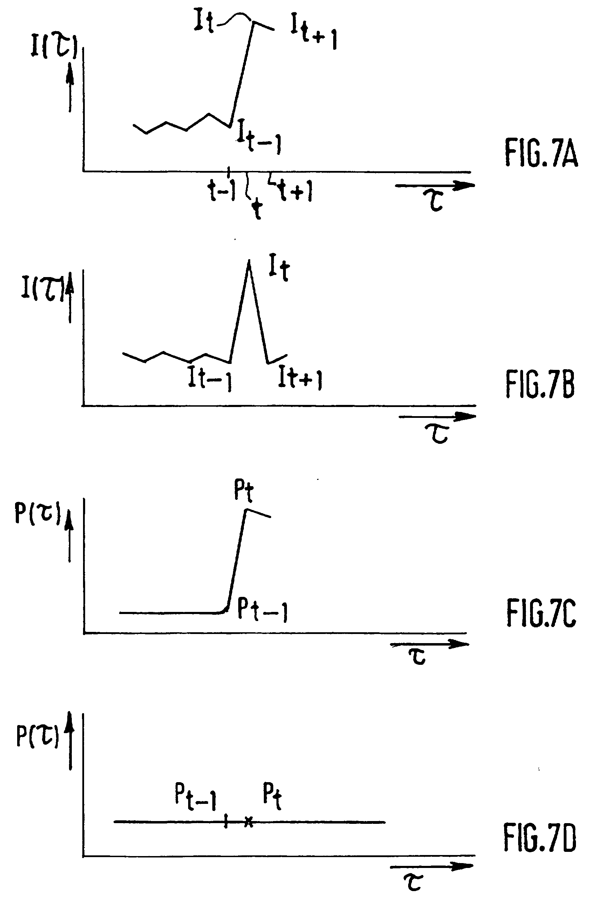

En référence aux FIG.7A et FIG.7B, un procédé de filtrage temporel récursif du bruit apte à réduire le bruit de chaque image successivement dans une séquence d'images comprend un traitement d'un signal appelé signal temporel bruité formé des différents niveaux d'intensité $I_{t-1}$, $I_t$, $I_{t+1}$ des pixels $A_{t-1}$, $A_t$, $A_{t+1}$ localisés en x,y en fonction du temps t (tau). En référence à la FIG.7A, le signal temporel montre un front de montée d'intensité entre les instants t-1 et t, avec un plateau au-delà de t, à l'instant t+1, qui est caractéristique d'un mouvement entre les instants t-1 et t+1, dans un signal par ailleurs simplement bruité. En référence à la FIG.7B, le signal temporel montre un pic de bruit à l'instant t, entre les instants t-1 et t+1, donc un signal qui est simplement entièrement bruité. En référence à la FIG. 7C, un procédé de filtrage temporel a été appliqué au signal de la FIG.7A pour obtenir un signal temporel filtré noté P (t) par un filtrage temporel récursif sans compensation du mouvement. Il en résulte que les intensités restent décalées de part et d'autre du front de montée dû au mouvement. La FIG.7D montre le même signal temporel filtré du bruit dans lequel le front de montée n'existe plus ce qui signifie que le mouvement est en outre compensé. Le présent procédé permet d'estimer le mouvement pour le compenser afin d'obtenir le résultat de la FIG.7D.

On appelle échantillons les intensités temporelles $I_{t-1}$, $I_t$, $I_{t+1}$ qui sont les points du signal temporel. Les échantillons précédant et suivant l'échantillon traité $I_t$ sont appelés respectivement causal et anti-causal et notés $I_{t-1}$ et $I_{t+1}$. Un procédé de filtrage temporel récursif met en oeuvre un calcul d'une fonction générale telle que la suivante :

$$P_t = P_{t-1} + K_t (I_t - P_{t-1}) \qquad\qquad (1)$$

où $K_t$ est un facteur de débruitage qui peut être adapté pour que le filtrage temporel récursif traite les petits mouvements locaux et les pics de bruit comme il est enseigné dans les demandes de brevets européens EP-0751482 ou EP-0751483. Les procédés décrits dans ces demandes permettent de filtrer le bruit, les pics de bruit et les trainées de bruit.

Le filtrage temporel récursif constitue selon les connaissances de l'homme du métier une des meilleures méthodes de débruitage d'images. Cependant ce type de filtrage n'est pas capable de filtrer l'image correctement dans le cas où un mouvement de forte amplitude apparaît. Une solution pour utiliser néanmoins le filtrage temporel récursif en cas de mouvement est d'appliquer un procédé de traitement d'images qui comprend une première phase d'estimation de mouvement et une seconde phase de filtrage temporel récursif. La combinaison de ces deux phases peut se faire selon différents schémas.

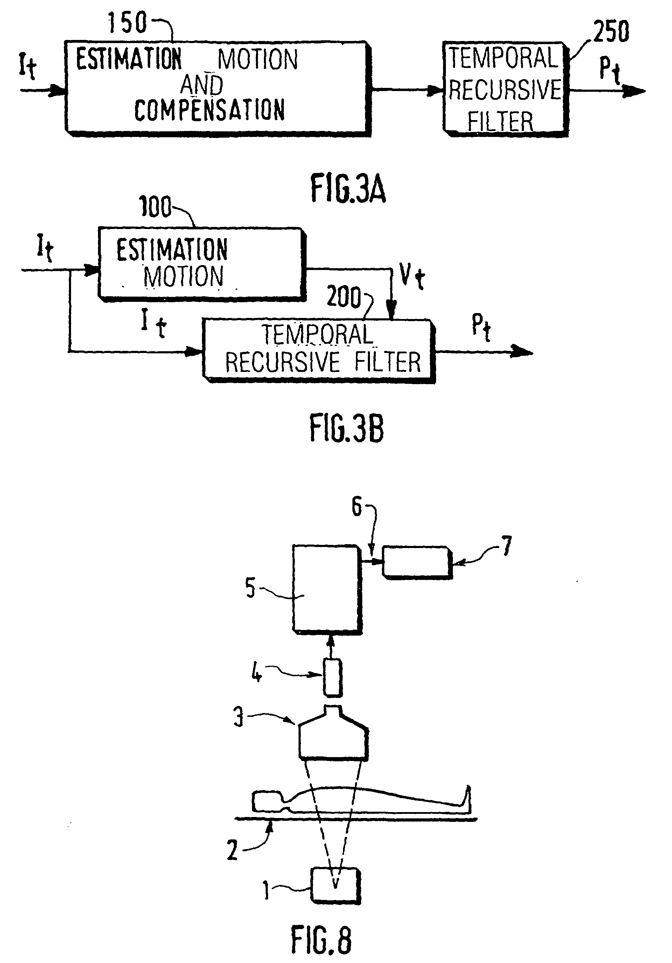

Dans un premier schéma, en référence à la FIG.3A, le signal bruité It de l'image $J_t$ à traiter est soumis à une première phase 150 dans laquelle sont effectuées à la fois une estimation et une compensation des mouvements relatifs à l'image traitée $J_t$. Cette première phase fournit un signal compensé $C_t$ (anglais : Registered). Ce signal compensé $C_t$ est ensuite soumis à une deuxième phase 250 qui effectue le filtrage temporel récursif et fournit le signal débruité $P_t$.

Dans un second schéma, en référence à la FIG.3B, le signal bruité $I_t$ de l'image $J_t$ à traiter est soumis à une première phase 100 qui réalise uniquement une estimation de mouvement et qui fournit un vecteur de mouvement $V_t$ relatif à la localisation x,y. Le signal bruité $I_t$ et le vecteur de mouvement $V_t$ sont ensuite soumis à une deuxième phase 200 qui réalise le filtrage temporel du signal $I_t$ aidé par le vecteur de mouvement $V_t$ pour compenser le mouvement et produire le signal débruité $P_t$ à affecter au pixel courant pour construire une image débruitée.

Ces deux schémas visent au même but. En pratique le premier schéma de la FIG.3A est plus souvent utilisé : le filtre temporel reçoit à la fois les intensités $I_t$ des images et un champ de vecteur de mouvement $V_t$, et utilise le champ de vecteur de mouvement pour compenser le mouvement dans l'image en même temps qu'il la filtre.

Un but de l'invention est donc de fournir un procédé d'estimation de mouvement pour réaliser la première phase des schémas présentés ci-dessus. L'estimation de mouvement constitue un procédé en soi servant à débruiter des images pour être combiné à une deuxième phase de filtrage temporel, pour un débruitage efficace en cas de mouvement. De nombreuses méthodes d'estimation de mouvement existent déjà dans l'état de la technique, mais ces méthodes s'appliquent en général à des images peu bruitées, de sorte que lorsqu'elles sont appliquées à des images fortement bruitées les résultats sont catastrophiques.

En référence aux FIGs.1 et 5A, le présent procédé d'estimation de mouvement comprend une étape préliminaire 20 où l'image à traiter $J_t$ est découpée en blocs jointifs de dimension 12 x 12 ou 16 x 16 pixels par exemple. L'image $J_t$ est ainsi pavée en blocs élémentaires appelés blocs de référence notés RBt (anglais : Referenced Block). Les blocs de référence sont traités les uns après les autres selon une méthode de balayage complètement automatique connue de l'homme du métier, par exemple de gauche à droite et de haut en bas de l'image. Pour l'exposé du présent procédé on considère un bloc courant qui est un bloc de référence choisi à une position donnée dans l'image à traiter $J_t$. Chaque bloc de référence de l'image $J_t$ est défini par un point de référence $M_k$ qui se trouve par exemple au centre du bloc. Le point de référence est considéré toujours au même endroit dans chaque bloc et est caractérisé par ses coordonnées x,y, comme dans la FIG.4. Dans l'image $J_t$, le bloc de référence lui-même constitue un voisinage noté NG(x,y) du point de référence $M_k$.

Le présent procédé d'estimation de mouvement noté ici FA-BMA comporte ensuite deux étapes importantes qui sont:

une étape 30 d'application d'une politique de recherche spécifique (en anglais : Search Policy) notée SP, qui, à partir d'un bloc de référence donné dans l'image à traiter, définit des blocs candidats dans une fenêtre de recherche respectivement dans deux images qui sont les images causale et anti-causale, dans des sous-étapes 31 et 32, une étape 40 d'application d'un critère double de similarité d'intensité noté DCS (anglais: Similarity Measurement) qui permet de sélectionner deux blocs correspondants parmi les blocs candidats respectivement dans les images causale et anti-causale et de calculer deux vecteurs de mouvement symétriques du bloc de référence vers chacun des blocs correspondants à partir desquels un vecteur de mouvement à affecter au bloc de référence est dérivé.

Ainsi, le présent procédé d'estimation de mouvement noté FA-BMA comprend une mise en correspondance de trois blocs respectivement dans trois images temporelles constituées par l'image à traiter $J_t$, l'image causale $J_{t-1}$ et l'image anti-causale $J_{t+1}$. On notera que l'algorithme d'estimation de mouvement déjà connu de l'état de la technique noté BMA (de l'anglais Block Matching Algorithm) effectue la mise en correspondance de seulement deux blocs dans respectivement deux images temporelles qui sont uniquement l'image à traiter et l'image causale. L'étape de politique de recherche utilise non donc pas seulement deux images successives comme déjà connu mais un triplé d'images constitué de l'image causale $J_{t-1}$, l'image à traiter $J_t$ et une image supplémentaire qui est l'image anti-causale $J_{t+1}$.

En référence à la FIG.5A, l'étape 30 d'application de la politique spécifique de recherche SP comprend d'une part, pour un bloc de référence donné $RB_t$ une sous-étape 31 de détermination d'un bloc homologue noté $HB_{t-1}$ dans l'image causale $J_{t-1}$ qui a la même localisation x,y que le bloc de référence $RB_t$ et autour du bloc homologue $HB_{t-1}$ une définition d'une fenêtre de recherche notée $SW_{t-1}$ (anglais : Search Window) dans laquelle on définit un certain nombre de blocs appelés candidats.

L'étape 30 d'application de la politique spécifique de recherche SP comprend d'autre part, pour le même bloc de référence $RB_t$, une sous-étape 32 de détermination d'un bloc homologue anti-causal $HB_{t+1}$ dans l'image anti-causale $J_{t+1}$, de définition d'une fenêtre de recherche $SW_{t+1}$ autour du bloc homologue anti-causal dans laquelle on définit des blocs candidats selon le même processus.

On définit les fenêtres de recherche $SW_{t-1}$, $SW_{t-1}$, par leur taille, ce qui définit le module maximal des vecteurs de mouvement que l'on peut trouver entre les instants t et t-1 d'une part , et t et t+1 d'autre part. Le vecteur s'arrête aux limites de la fenêtre de recherche qui est donc déterminée d'après les mouvements maximaux que l'on attend dans l'image, ou que l'on veut compenser.

L'étape 40, 42 d'application du critère double de similarité d'intensité DSC comprend d'une part, une comparaison des blocs candidats de l'image causale $J_{t-1}$ au bloc de référence $RB_t$, et comprend d'autre part une comparaison des blocs candidats de l'image anti-causale $J_{t+1}$ au même bloc de référence $RB_t$ avec le même critère double de similarité d'intensité appliqué à cette image anti-causale au lieu de l'image causale. Les blocs candidats qui ressemblent le plus au bloc de référence $RB_t$ suivant ce critère double de similarité d'intensité sont choisis comme blocs correspondants et sont notés respectivement $CB_{t-1}$ et $CB_{t+1}$ pour définir un premier vecteur de mouvement noté V(t,t-1) entre l'instant t et l'instant t-1 à la localisation x,y. et pour définir un second vecteur de mouvement noté V(t,t+1) entre les instants t et t+1 à la même localisation x,y. Le premier vecteur de mouvement V(t,t-1) relie spatialement le centre $Mk_t$ du bloc de référence $RB_t$ au centre $Mk_{t-1}$ du bloc correspondant $CB_{t-1}$ et est orienté du bloc de référence $RB_t$ dans l'image $J_t$ vers le bloc homologue $HB_{t-1}$ Le second vecteur de mouvement V(t,t+1) relie spatialement le centre $Mk_t$ du bloc de référence $RB_t$ au centre $Mk_{t+1}$ du bloc correspondant $CB_{t+1}$ et est orienté du bloc de référence $RB_t$ dans l'image $J_t$ vers le bloc anti-causal homologue $HB_{t+1}$.

Le critère double de similarité nouveau D-SC est fondé sur une hypothèse que le mouvement entre le bloc correspondant dans l'image t-1 et le bloc de référence dans l'image t d'une part, et entre le bloc de référence dans l'image t et le bloc correspondant dans l'image t+1 est localement linéaire, continu et uniforme. C'est-à-dire que le vecteur de mouvement entre t-1 et t est le même qu'entre t et t+1. Ainsi le vecteur V(t-1,t) est le même que le vecteur V(t,t+1), a le même module et la même orientation. En référence à la FIG.5B, ces vecteurs sont portés par les mêmes supports et sont représentés par des flèches qui divergent à partir du bloc de référence $RB_t$, ce qui s'exprime par l'égalité :

$$V(t,t-1) = -V(t,t+1) \qquad (2)$$

On détermine donc un premier bloc correspondant $CB_{t-1}$ dans l'image $J_{t-1}$ et un second bloc correspondant $CB_{t+1}$ dans l'image $J_{t+1}$ avec la contrainte que ces deux blocs correspondants doivent être symétriques par rapport au bloc de référence $RB_t$ dans l'image $J_t$.

Pour déterminer ces vecteurs symétriques, on définit un critère de similarité élémentaire qui forme une première partie appelée causale du critère double de similarité et qui s'applique entre le premier bloc correspondant $CB_{t-1}$ dans la fenêtre de recherche $SW_{t-1}$ et le bloc de référence $RB_t$ dans l'image $J_t$ et qui est notée :

$$SC^C(Mk_t, Mk_{t-1} + V) \tag{3a}$$

On définit de la même manière un critère de similarité élémentaire qui forme une seconde partie appelée anti-causale du critère double de similarité et qui s'applique entre le second bloc correspondant dans la fenêtre de recherche $SW_{t+1}$ et le bloc de référence $RB_t$ dans l'image $J_t$ et qui est notée :

$$SC^A(Mk_t, Mk_{t+1} + V) \tag{3b}$$

Le point Mk + un vecteur définissent en notation afine un autre point translaté du point Mk par ledit vecteur. En tenant compte des échantillons du signal temporel, les parties causale et anti-causale du critère double de similarité s'écrivent respectivement :

$$SC^C = \Sigma \; [I_t(x_k, y_k) - I_{t-1}(x_k + V_x, y_k + V_y)]^2 \tag{4a}$$

$$SC^A = \Sigma \; [I_t(x_k, y_k) - I_{t+1}(x_k + V_x, y_k - V_y)]^2 \tag{4b}$$

$$(x_k, y_k) \in NG_k \tag{5a}$$

Les parties causale et anti-causale du critère double tel qu'écrites ci-dessus représentent respectivement la distance euclidienne entre le bloc de référence et le bloc candidat dans l'image causale et dans l'image anti-causale, c'est-à-dire la somme des carrés des différences des intensités de deux pixels, dont l'un est dans le bloc de référence et dont l'autre est respectivement dans le bloc candidat de l'image causale qui correspond au vecteur V(t,t-1) et dans le bloc candidat de l'image anti-causale qui correspond au vecteur V(t,t+1).

Plus précisément, un vecteur V est défini par ses deux composantes $V_x$ et $V_y$. Pour chaque localisation x,y, il existe un pixel dans le bloc de référence et un pixel correspondant dans le bloc candidat. Les différences d'intensité entre les deux pixels sont calculées, sont élevées au carré et l'ensemble est sommé. Cela représente énormément de calcul. Cette partie causale $SC^C$ du critère de similarité est calculée pour chaque bloc candidat, et le bloc qui donne la mesure de similarité la plus probante est choisi pour déterminer le vecteur de mouvement. Donc le nombre de différences au carré qui doivent être calculées pour évaluer le critère de similarité est égal au nombre de pixels qu'il y a dans le bloc : si c'est un bloc de 8 x 8 pixels, c'est une somme de 64 éléments. Les pixels sont pris deux à deux, à raison de 1 dans chaque bloc, séparés par le même vecteur V. Un vecteur V est défini pour chaque bloc candidat. Dans un bloc de référence tous les pixels sont sensés avoir le même vecteur mouvement. C'est-à-dire que, à la base du procédé FA-BMA, c'est un mouvement de translation qui relie deux blocs, et que $V_x$ et $V_y$ ne varient pas pour un bloc candidat donné. Si on définit un bloc de 8 x 8 pixels en taille, et si on définit une fenêtre de recherche SW qui fait plus ou moins 10 ou 15 pixels autour du bloc homologue, il existe 10 ou 15 positions possibles de chaque côté du bloc en x et en y. Cela signifie que l'objet peut se déplacer de plus ou moins 10 ou 15 pixels. Donc la fenêtre de recherche à une taille de 28 x 28 pixels, ou 33 x 33 pixels. Cela veut dire que, par bloc candidat, on doit effectuer 64 différences élevées au carré et sommées pour une seule mesure de similarité. Il en est de même pour l'estimation du vecteur de mouvement au moyen de la seconde partie anti-causale $SC^A$ du critère de similarité d'intensité.

On utilise de préférence une politique de recherche particulière exhaustive notée F-SP, selon laquelle on choisit tous les blocs possibles de la fenêtre de recherche, c'est-à-dire tous les blocs qui sont référencés par leur point de référence, qui est par exemple le pixel central, et par leurs dimensions. Chaque point de la fenêtre de recherche est alors point de référence pour un bloc candidat. Dans ce cas, pour évaluer le premier critère causal $SC^C$, on doit tester tous les blocs candidats possibles dans la fenêtre de recherche, qui ici est de 28 x 28 pixels ou 33 x 33 pixels, et on doit alors faire 784 ou 1089 mesures de similarité. Au total cela fait 784 x 64 ou 1089 x 64 différences au carré. On fait de même pour évaluer le second critère de similarité anti-causal $SC^A$. Donc le calcul des mesures de similarité avec cette politique de recherche exhaustive F-SP met en jeu des puissances de calcul très importantes qui sont nécessaires pour faire l'estimation de mouvement.

Le critère double de similarité d'intensité D-SC est donc nouveau du fait qu'il combine une partie causale et une partie anti-causale qui sont un même critère de similarité élémentaire appliqué à des instants différents. Ainsi le critère double D-SC peut s'écrire :

$$D\text{-}SC = SC^C[Mk_t, Mk_{t-1} + V] + SC^A [Mk_t, Mk_{t+1} -V] \tag{6}$$

Selon cette formulation (6), on évalue la partie causale et la partie anti-causale que l'on somme pour former le critère double de similarité d'intensité appelé critère causal anti-causal.

Le vecteur de mouvement recherché est celui qui minimise le critère double de similarité sur l'ensemble des blocs candidats définis dans les fenêtres de recherche $SW_{t+1}$ et $SW_{t-1}$ dans les images $J_{t+1}$ et $J_{t-1}$.

Pour évaluer le critère double de similarité D-SC causal anti-causal, on peut utiliser la distance euclidienne que l'on a défini précédemment. On peut d'autre part utiliser une somme des valeurs absolues des différences d'intensité. D'une manière générale le critère de similarité causal anti-causal est une fonction ou une combinaison de deux parties causale et anti-causale d'un critère de similarité d'intensité.

Ci-après on note L2 la distance ou norme euclidienne, on note L1 la somme des valeurs absolues des différences d'intensité. Selon que l'on utilise l'une ou l'autre norme pour constituer les parties du critère de similarité, on note le critère de similarité causale anti-causale soit $D\text{-}SC_{DL2}$, soit $D\text{-}SC_{DL1}$. D'une manière générale on peut utiliser des distances telles que : $[\Sigma [I_t - I_{t-1}]^p ]^{1/p}$, ou $[\Sigma [I_t - I_{t+1}]^p ]^{1/p}$ qui est la distance dite de Minkowski. On note ci-après Lp la distance utilisée pour évaluer les parties causale et anti-causale du critère double de similarité maintenant noté $DSC_{DLp}$.

L'expérimentation montre que ce nouveau critère double $D\text{-}SC_{DLp}$ donne de très bons résultats lorsque le mouvement est linéaire, car, lorsque l'on trouve un bloc correspondant causal ayant un vecteur V, le bloc correspondant anti-causal se trouvera nécessairement avoir un vecteur -V. De cette manière, au lieu d'utiliser l'information qui provient de deux blocs seulement, c'est-à-dire du bloc de référence et du bloc causal, comme cela était le cas dans l'état de la technique, on utilise l'information qui est extraite de trois blocs : le bloc causal, le bloc de référence et le bloc anti-causal. De cette manière le procédé d'estimation de mouvement est beaucoup plus résistant au bruit du fait que l'on a pris en compte davantage d'information. Cela revient à agir sur la mesure de similarité.

Cependant, si le mouvement n'est pas linéaire sur les trois images, le procédé décrit plus haut n'est pas applicable. Cela est très peu fréquent. En effet, lorsque l'on travaille à une cadence de 25 images par seconde, deux images sont séparées par $1/25^{ème}$ de seconde. Il en résulte que, à cette cadence, entre trois images consécutives on peut considérer que le mouvement est linéaire et continu sur trois image temporelles.

Néanmoins, en référence à la FIG.1, pour prendre en compte l'éventualité d'un mouvement non linéaire arrivant entre les instants t-1 et t+1, le présent procédé comporte une sous-étape 41 menée en parallèle à la sous-étape 42 dans l'étape 40, formant deux chaînes 41, 42 se terminant par une étape de TEST 50 qui s'applique dans ce cas.

Soit $V_0$ le vecteur déterminé par un critère de similarité élémentaire appliqué entre les seuls blocs de référence et causal, et soit $V_{DLp}$ le vecteur déterminé par le critère double causal anti-causal exhaustif. Le vecteur $V_{DLp}$ est moins bon que le vecteur $V_0$ dans le cas d'un mouvement non linéaire non continu non uniforme puisque le vecteur $V_0$ est le meilleur dans la fenêtre de recherche entre les images $J_t$ et $J_{t-1}$. Dû à cette non continuité le vecteur $V_{DLp}$ peut être complètement différent du vrai vecteur de mouvement, d'où il résulte que la distance :

$$Lp (V_0) < m \times Lp(V_{DLp}) \tag{7}$$

Dans la formule (7) le facteur m doit être précisé. Si par exemple $Lp (V_0)$ est plus petit de plus de 20 % que $LP (V_{DLp})$ cela signifie que l'hypothèse linéaire continue n'est probablement pas vraie et que le vecteur $V_0$ est le meilleur vecteur recherché. Donc dans la formule (7) m est équivalent à 0,8 pour correspondre à 20 % .

Dans la chaîne 41 avec TEST 50, si la relation (7) est vérifiée, un mouvement non linéaire ou non continu ou non uniforme est détecté et alors une décision 61 est prise entraînant que le vecteur de mouvement choisi est :

$$V_{ADLP} = V_0.$$

Si la relation (7) n'est pas vérifiée, alors le mouvement détecté est linéaire, continu et uniforme entre les trois images, une autre décision 62 est prise et le vecteur de mouvement choisi est :

$$V_{ADLp} = V_{DLp}.$$

où ADLp signifie DLp adaptable (anglais : Adaptative DLp). Le critère de similarité selon la FIG.1 est donc un critère de similarité d'intensité double et adaptatif noté: $AD\text{-}SC_{DLp}$. D'une part, dans le cas où le présent procédé peut reposer sur l'hypothèse de linéarité, il est beaucoup plus robuste au bruit que le procédé déjà connu comme il a été expliqué plus haut. D'autre part le présent procédé permet de tester l'hypothèse de linéarité, et, s'il s'avère que l'on n'est pas dans cette hypothèse de linéarité, il fournit une solution qui est localement acceptable. En pratique, l'utilisation du critère double et adaptatif AD-SC$_{DLp}$ conduit à des résultats tout à fait remarquables, d'autant plus qu'il est très rare de mettre en défaut l'hypothèse de linéarité entre trois images temporelles.

Ainsi, dans le procédé d'estimation de mouvement noté FA-BMA, le critère double et adaptatif de similarité d'intensité noté AD-SC$_{DLp}$ est fondé sur les informations de trois blocs temporels et est constitué par une fonction d'une partie de critère causal et d'une partie de critère anti-causal. Ce procédé permet en particulier d'effectuer un TEST sur la partie causale de cette fonction et, à l'issue de ce TEST, de déduire si l'hypothèse de linéarité est vérifiée ou non. Cette vérification est faite sur chaque bloc. D'une manière générale le calcul sur la partie de critère causal est d'abord effectué fournissant le vecteur qui minimise la partie causale du critère, ce qui fait que ce TEST est réalisé une seule fois par bloc de référence.

Ce critère de similarité double et adaptatif introduit une notion de cohérence temporelle, c'est-à-dire qu'il faut que le champ de vecteur que l'on trouve de manière temporelle vérifie une hypothèse de linéarité, ce qui impose une contrainte sur le vecteur que l'on cherche. Dans la phase de filtrage temporel au lieu de filtrer selon l'axe temporel classique, l'application de ce vecteur de mouvement permet de filtrer selon la direction du mouvement. Ainsi le filtrage temporel est appliqué entre des blocs qui se ressemblent au lieu d'être effectué entre des blocs dissemblables à cause du mouvement.

De préférence, on utilise la politique de recherche exhaustive F-SP selon laquelle on considère tous les blocs de référence dans l'image $J_t$ puis, pour chaque bloc de référence, on analyse tous les blocs possibles dans la fenêtre de recherche de l'image causale et en même temps dans la fenêtre de recherche de l'image anti-causale. Cela représente une quantité de calculs considérable. Ce procédé est dans ce cas implanté en combinant un grand nombre de processeurs ou bien en réalisant un CHIP dédié.

On propose ci-après d'utiliser une politique de recherche particulière notée HF-SP qui permet de réduire ces calculs et qui est complètement adaptée à la réalisation du procédé d'estimation de mouvement en temps réel. Cette politique de recherche est appelée recherche hiérarchique (anglais : Hierarchical Search). En combinant cette politique de recherche hiérarchique HF-SP et un critère double de similarité causal anti-causal adaptatif AD-SC$_{DLp}$, on définit complètement un nouveau procédé d'estimation de mouvement.

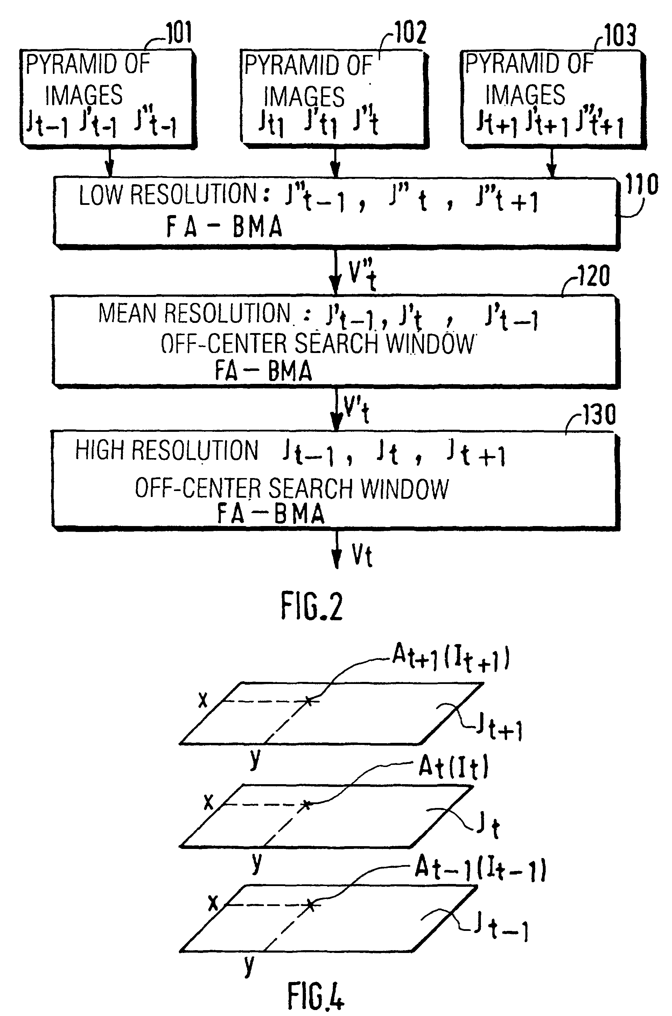

En référence à la FIG.2, dans la méthode hiérarchique on décompose dans une étape 101 l'image d'origine en la filtrant et en la sous-échantillonnant. On part de l'image d'origine $J_t$ et par un procédé connu de l'état de la technique on associe 1 pixel à voisinage de pixels de l'image d'origine et on attribue à ce pixel une intensité calculée comme la moyenne d'intensité du voisinage. Dans l'exemple décrit ci-après le voisinage est de 4 pixels autour d'un pixel considéré. La moyenne est calculée sur le quadruplé de pixels. On réalise ainsi une image décomposée à un premier niveau notée $J'_t$. Puis on recommence en regroupant 4 par 4 les pixels de l'image $J'_t$ au premier niveau pour former une image plus petite à un second niveau notée $J''_t$. On obtient ainsi une pyramide d'images formée de l'image $J_t$ à la résolution d'origine, de l'image $J'_t$ à un premier niveau à une résolution intermédiaire et de l'image $J''_t$ à un second niveau à une résolution grossière. A cette dernière résolution la plus grossière on a concentré l'image qui contient tous les détails importants qu'il y avait dans l'image d'origine. On a perdu des petites nuances, des détails très fins, mais on a conservé les grandes tendances de l'image. Il faut noter que cette image grossière $J''_t$ n'est pas une image filtrée du bruit, et donc que le fait de perdre des détails n'est pas important à ce stade.

En référence aux FIGs.1 et 6, on réalise cette pyramide d'images sur l'image $J_t$ dans l'étape 101, sur l'image causale $J_{t-1}$, ce qui fournit $J'_{t-1}$, $J''_{t-1}$ dans l'étape 102 et sur l'image anti-causale $J_{t+1}$, ce qui fournit $J'_{t+1}$, $J''_{t+1}$ dans l'étape 103. Ensuite on applique dans des étapes 110, 120, 130 le nouveau procédé selon l'invention qui a été noté plus haut FA-BMA entre les images à traiter et les images causales et anti-causales ayant respectivement la même résolution. Par cet effet de dilatation, le nombre de calculs impliqués pour rechercher les vecteurs de mouvement n'est plus proportionnel à la grandeur du vecteur de mouvement que l'on veut détecter, mais à cette grandeur divisée par deux à la puissance n où n est le nombre de niveaux de décomposition. Donc avec deux niveaux de décomposition par rapport à la résolution normale le nombre de calculs est divisé par quatre.

Le déroulement des opérations est le suivant. On détermine d'abord dans l'étape 110 un vecteur $V''_t$ de mouvement au moyen des trois images à la résolution la plus grossière. Puis on recherche dans l'étape 120 un vecteur $V'_t$ à la résolution intermédiaire : c'est-à-dire que l'on multiplie par deux la grandeur du vecteur $V''_t$ trouvé à la résolution la plus grossière et on détermine les fenêtres de recherche dans les images causale et anti-causale intermédiaires non pas autour de la localisation du point de référence mais autour de l'extrémité de ce vecteur plus probable déterminé à l'aide des images de résolution la plus grossière. On trouve un nouveau vecteur $V'_t$ dans cette étape 120 grâce à ces images intermédiaires et on renouvelle les opérations dans l'étape 130 dans le triplé d'images à la résolution la plus fine, ce qui permet de déterminer rapidement un vecteur de mouvement $V_t$ à cette résolution la plus fine.

Des tests expérimentaux ont montré que le critère AD-SC$_{DLp}$ donnait des résultats très satisfaisants en utilisant une recherche hiérarchique aux résolutions que l'on vient de préconiser. En effet, si la résolution est trop fine le nombre des calculs est terriblement grand. En revanche si les images sont trop grossières on introduit parfois des erreurs parce que les blocs sont tellement grossiers que l'hypothèse linéaire n'est plus sensible. Par contre en utilisant les niveaux intermédiaires préconisés, d'une part les calculs sont peu onéreux car on a encore des blocs petits, et d'autre part on améliore très substantiellement les résultats. Ceci permet de travailler en temps réel. Les calculs ont été effectués au moyen d'un processeur de signal référencé C80 connu de l'homme du métier existant aujourd'hui. Avec ce processeur, on peut mettre en oeuvre un procédé $ADSC_{DLp}$ en temps réel avec une fraction d'utilisation égale à 0,6 pour la partie de recherche pyramidale HFSP et avec une fraction d'utilisation de 0,7 pour la partie de recherche pyramidale HFSP suivie du procédé $ADSC_{DLp}$. La mise en oeuvre du procédé décrit plus haut nécessite donc un seul composant C80.

En référence à la FIG.8, un appareil de radiographie numérisée comprend une source 1 de rayons X, une table 2 pour recevoir le patient, un dispositif 3 intensificateur d'image couplé à un tube video 4, qui fournit des données à un système 5 de traitement numérique d'image comprenant un processeur. pour mettre en oeuvre le procédé d'estimation de mouvement et un filtrage du bruit utilisant ce procédé. Ce processeur comprend plusieurs sorties dont une sortie 6 couplée à un moniteur 7 pour visualiser une séquence d'images radiographiques. L'appareil de radiographie peut travailler en mode fluoroscopique grâce à ce système de traitement d'images.

## Revendications

1. Procédé de traitement d'images pour l'estimation de mouvement dans une séquence d'images bruitées, incluant une étape de détermination d'un champ de vecteurs de mouvement d'une image temporelle à la suivante sur la base d'un algorithme de mise en correspondance de blocs, ce procédé comprenant des étapes de :

   acquisition d'une séquence de trois images temporelles successives incluant une image à traiter ($J_t$) entre une image antérieure appelée causale ($J_{t-1}$) et une image ultérieure appelée anti-causale ($J_{t+1}$), détermination d'un bloc de référence ($RB_t$) dans l'image à traiter, et d'un couple de blocs localisés respectivement dans l'image causale et l'image anti-causale, ($CB_{t-1}$,$CB_{t+1}$) correspondant au mieux au bloc de référence ($RB_t$) selon un critère de similarité d'intensité, et détermination d'un vecteur de mouvement relatif au bloc de référence sur la base de la localisation des blocs de ce couple vis-à-vis de la localisation du bloc de référence,

   **caractérisé en ce que**:

   le critère de similarité d'intensité appelé critère double est une fonction d'un premier critère de similarité élémentaire appelé partie causale qui relie le bloc de référence au bloc correspondant dans l'imagecausale et d'un second critère de similarité élémentaire appelé partie anti-causale qui relie le bloc de référence au bloc correspondant dans l'image anti-causale.

2. Procédé selon la revendication 1, où le critère de similarité d'intensité est basé sur une hypothèse de mouvement linéaire, continu et uniforme du bloc correspondant dans l'image causale au bloc correspondant dans l'image anti-causale, pour sélectionner des blocs correspondants symétriques par rapport au bloc de référence et pour déterminer des vecteurs de mouvement symétriques du bloc de référence vers chacun des blocs correspondants.

3. Procédé selon l'une des revendications 1 ou 2, où ces parties causale et anti-causale sont identiques et appliquées à des instants différents relatifs aux images causales et anti-causales.

4. Procédé selon la revendication 3, où la fonction pour former le critère double à partir des parties causale et anti-causale est choisie parmi une somme, une moyenne et une combinaison linéaire.

5. Procédé selon l'une des revendications 3 ou 4, où l'étape de détermination des blocs correspondants comprend un test appliqué sur le mouvement entre le bloc correspondant dans l'image causale et le bloc correspondant dans l'image anti-causale pour déterminer si une hypothèse que ce mouvement est linéaire, continu et uniforme est vérifiée ou non, et en fonction de ce test, une décision est prise que:

   si cette hypothèse est vérifiée le vecteur de mouvement est déterminé par le critère double de similarité d'intensité, et si cette hypothèse n'est pas vérifiée le vecteur de mouvement est déterminé par un critère élémentaire de similarité d'intensité entre le bloc de référence et le bloc correspondant anti-causal, ce test déterminant que ladite hypothèse est vérifiée si le vecteur de mouvement qui optimise le critère double est substantiellement identique à un vecteur de mouvement qui optimise la partie causale de ce critère double.

**6.** Procédé selon l'une des revendications 3 à 5, où les critères élémentaires de similarité d'intensité sont des distances d'un type appelé Minkowski.

**7.** Procédé de traitement d'image selon l'une des revendications 1 à 6 comprenant :

- une étape de formation de trois pyramides d'images à différentes résolutions à partir de l'image à traiter, à partir de l'image causale et à partir de l'image anti-causale,
- une étape de détermination d'un vecteur de mouvement par l'application du critère de similarité sur les trois images de plus faible résolution dérivées de l'image à traiter, de l'image causale et de l'image anticausale,
- une étape de report du vecteur mouvement trouvé à la plus faible résolution dans les images dérivées de limage à traiter, de image causale et de l'image anticausale à la résolution immédiatement supérieure et de recherche d'un nouveau vecteur de mouvement autour du vecteur reporté à cette résolution immédiatement supérieure,
- une répétition de cette étape jusqu'à la résolution la meilleure pour trouver le vecteur de mouvement recherché.

**8.** Procédé de traitement d'image pour la réduction du bruit dans une séquence d'images comprenant des étapes selon l'une des revendications 1 à 7 pour l'évaluation de vecteurs de mouvements entre les images de la séquence, et des étapes de filtrage temporel récursif du bruit avec compensation de mouvement au moyen de ces vecteurs.

**9.** Appareil d'imagerie médicale qui comprend un système d'acquisition d'une séquence dîmages, et un système de traitement d'image qui a accès aux données des images et à un système d'affichage des images de la séquence et qui comprend un processeur mettant en oeuvre un procédé de traitement d'image selon l'une des revendications 1 à 8.

**10.** Appareil à rayons X qui comprend un système d'acquisition d'une séquence d'images, et un système de traitement d'image qui a accès aux données des images et à un système d'affichage des images de la séquence et qui comprend un processeur mettant en oeuvre un procédé de traitement d'image selon l'une des revendications 1 à 8.

**Claims**

**1.** An image processing method for estimating motion in a sequence of noisy images which includes a step of determining a motion vector field from one temporal image to the next on the basis of a block matching algorithm, which method includes the steps of:

acquiring a sequence of three successive temporal images, including an image to be processed ($J_t$) between a preceding, so-called causal image ($J_{t-1}$) and a later, so-called anti-causal image ($J_{t+1}$), determining a reference block ($RB_t$) in the image to be processed, and a pair of blocks which are located in the causal image and the anti-causal image ($CB_{t-1}$, $CB_{t+1}$), respectively, and best match the reference block ($RB_t$) in conformity with an intensity similarity criterion, and
determining a motion vector relating to the reference block on the basis of the location of the blocks of said pair with respect to the location of the reference block, **characterized in that** the intensity similarity is a function of a first similarity criterion called causal part which connects the reference block to the matching block in the causal image and a second elementary similarity criterion called anti-causal part which connects the reference block to the matching block in the anti-causal image.

**2.** A method as claimed in Claim 1, in which the intensity similarity criterion is based on a hypothesis of linear, continuous and uniform motion of the matching block in the causal image and the matching block in the anti-causal image for the selection of matching blocks which are symmetrical with respect to the reference block, and for determining symmetrical motion vectors from the reference block towards each of the matching blocks.

**3.** A method as claimed in one of the Claims 1 or 2, in which these causal and the anti-causal part are identical and applied to the causal and the anti-causal image at different relative instants.

**4.** A method as claimed in Claim 3, in which the function for forming the double criterion on the basis of causal and

EP 0 936 575 B1

anti-causal parts is chosen from among a sum, a mean value and a linear combination.

**5.** A method as claimed in one of the Claims 3 or 4, in which the step of determining matching blocks includes a test which is applied to the motion between the matching block in the causal image and the matching block in the anti-causal image in order to determine whether a hypothesis that this motion is linear, continuous and uniform is verified or not, and on the basis of this test a decision is taken:

if this hypothesis is verified, the motion vector is determined by the double intensity similarity criterion; and if this hypothesis is not verified, the motion vector is determined by an elementary intensity similarity criterion between the reference block and the anti-causal matching block, said test determining that said hypothesis is verified if the motion vector which optimizes the double criterion is substantially identical to a motion vector which optimizes the causal part of said double criterion.

**6.** A method as claimed in one of the Claims 3 to 5, in which the elementary intensity similarity criteria are so-called Minkowski distances.

**7.** An image processing method as claimed in one of the Claims 1 to 6, including:

- a step of forming three pyramids of images of different resolution, derived from the image to be processed, from the causal image, and from the anti-causal image,
- a step of determining a motion vector by application of the similarity criterion to the three images of lowest resolution, derived from the image to be processed, from the causal image, and from the anti-causal image,
- a step of relating the motion vector found at the lowest resolution in the images derived from the image to be processed, the causal image, and the anti-causal image, to the directly higher resolution, and for searching a new motion vector around the vector related to this directly higher resolution,
- repeating this step until the best resolution is obtained so as to find the motion vector searched.

**8.** An image processing method for reducing the noise in a sequence of images, including steps as disclosed in one of the Claims 1 to 7 for the evaluation of motion vectors between the images of the sequence, and steps for the recursive temporal filtering of the noise with motion compensation by means of these vectors.

**9.** A medical imaging apparatus which includes a system for the acquisition of a sequence of images and an image processing system which has access to the data of the images and to a system for displaying the sequence of images, and also includes a processor for carrying out an image processing method as claimed in one of the Claims 1 to 8.

**10.** An X-ray apparatus which includes a system for the acquisition of a sequence of images and an image processing system which has access to the data of the images and to a system for displaying the sequence of images, and also includes a processor for carrying out an image processing method as claimed in one of the Claims 1 to 8.

**Patentansprüche**

**1.** Bildbearbeitungsverfahren zur Bewegungseinschätzung von in einer verrauschen Bildsequenz dargestellten Objekten mit einem Schritt zur Bestimmung eines Felds von Bewegungsvektoren von einem temporalen Bilds auf das folgende auf der Basis eines Algorithmus zur Gleichsetzung der Blöcke, wobei dieses Verfahren folgende Schritte umfasst:

Erfassung einer Sequenz von der aufeinanderfolgenden temporalen Bildern mit einem zu bearbeitenden Bild ($J_t$) zwischen einem vorhergehenden Bild mit der Bezeichnung Kausalbild ($J_{t-1}$) und einem nachfolgenden Bild mit der Bezeichnung Antikausalbild ($J_{t+1}$),
Bestimmung eines Referenzblocks ($RB_t$) in dem zu bearbeitenden Bild und eines Blockpaars, respektive im Kausalbild und im Antikausalbild ($CB_{t-1}$, $CB_{t+1}$) befindlich, dem Referenzblock ($RB_t$) nach einem Intensitäts-Similaritätskriterium am meisten entsprechend, und Bestimmung eines Bewegungsvektors in Bezug auf den Referenzblock an der Lokalisierungsbasis der Blöcke dieses Paars hinsichtlich der Lokalisierung des Referenzblocks,

**dadurch gekennzeichnet, dass**

11

das doppelte Intensitäts-Similaritätskriterium eine Funktion eines elementaren ersten Similaritätskriteriums mit der Bezeichnung kausaler Teil ist, um den Referenzblock mit dem entsprechenden Block im Kausalbild zu verbinden, und eines elementaren zweiten Similaritätskriteriums mit der Bezeichnung antikausaler Teil, um den Referenzblock mit dem entsprechenden Block im Antikausalbild zu verbinden.

2. Verfahren nach Anspruch 1, bei dem das Intensitäts-Similaritätskriterium auf einer kontinuierlichen und einheitlichen linearen Bewegungshypothese des Blocks basiert, der im Kausalbild dem im Antikausalbild entsprechenden Block entspricht, um symmetrische entsprechende Blöcke in Bezug auf den Referenzblock auszuwählen und um symmetrische Bewegungsvektoren des Referenzblocks nach allen entsprechenden Blöcken zu bestimmen.

3. Verfahren nach einem der Ansprüche 1 oder 2, bei dem die Kausal- und Antikausalteile identisch sind und in verschiedenen Zeitpunkten in Bezug auf die Kausalund Antikausalbilder angewendet werden.

4. Verfahren nach Anspruch 3, bei dem die Funktion zur Bildung des doppelten Kriteriums anhand der Kausal- und Antikausalteile aus einer Summe, einem Durchschnitt und einer linearen Verbindung ausgewählt wird.

5. Verfahren nach einem der Ansprüche 3 oder 4, bei dem der Schritt zur Bestimmung der entsprechenden Blöcke einen Test umfasst, der zwischen dem entsprechenden Block um Kausalbild und dem entsprechenden Block im Antikausalbild auf die Bewegung angewendet wird, um festzustellen, ob eine Hypothese, dass diese Bewegung linear, kontinuierlich und einheitlich ist, geprüft ist oder nicht, und wo unter Berücksichtigung des Tests eine Entscheidung getroffen wird, dass:

wenn diese Hypothese geprüft ist, der Bewegungsvektor mit dem doppelten Intensitäts-Similaritätskriterium bestimmt wird, und

wenn diese Hypothese nicht geprüft ist, der Bewegungsvektor mit einem elementaren Intensitäts-Similaritätskriterium zwischen dem Referenzblock und dem entsprechenden Antikausalblock bestimmt wird,

wobei dieser Test feststellt, dass die besagte Hypothese geprüft ist, wenn der das doppelte Kriterium optimierende Bewegungsvektor grundsätzlich mit einem Bewegungsvektor identisch ist, der den Kausalteil der doppelten Kriteriums optimiert.

6. Verfahren nach einem der Ansprüche 3 bis 5, bei dem die elementaren Intensitäts-Similaritätskriterien Distanzen eines sogenannten Minkowski-Typs sind.

7. Verfahren nach einem der Ansprüche 1 bis 6 mit:

- einem Schritt zur Bildung von drei Bildpyramiden mit verschiedenen Auflösungen anhand des zu bearbeitenden Bildes, anhand des Kausalbildes und anhand des Antikausalbildes,
- einem Schritt zur Bestimmung eines Bewegungsvektors durch die Anwendung des Similaritätskriteriums über drei Bilder geringster Auflösung, abgeleitet vom zu bearbeitenden Bild, vom Kausalbild und vom Antikausalbild,
- einem Schritt zur Übertragung des mit der geringsten Auflösung gefundenen Bewegungsvektors in den vom zu bearbeitenden Bild, dem Kausalbild und dem Antikausalbild abgeleiteten Bildern mit einer direkt darüberliegenden Auflösung und zum Suchen eines neuen Bewegungsvektors um den übertragenen Vektor mit dieser direkt darüberliegenden Auflösung,
- einer Wiederholung dieses Schritts bis zur besten Auflösung, um den gesuchten Bewegungsvektor zu finden.

8. Bildbearbeitungsverfahren zur Rauschminderung in einer Bildsequenz mit den Schritten nach einem der Ansprüche 1 bis 7 für die Bewertung von Bewegungsvektoren zwischen den Bildern der Sequenz und den Schritten der rekursiven temporalen Filterung des Rauschens mit Kompensation der Bewegung mittels dieser Vektoren.

9. Medizinisches Bildgebungsgerät mit einem System zur Erfassung einer Bildsequenz und einem Bildbearbeitungssystem, welches Zugriff auf die Bilddaten hat, und mit einem System zur Anzeige der Bilder der Sequenz, welches einen Prozessor enthält, der ein solches Bildbearbeitungsverfahren nach einem der Ansprüche 1 bis 8 umsetzt.

10. Röntgenstrahlengerät mit einem System zur Erfassung einer Bildesequenz und einem Bildbearbeitungssystem, welches Zugriff auf die Bilddaten hat, und mit einem System zur Anzeige der Bilder der Sequenz, welches einen Prozessor enthält, der ein solches Bildbearbeitungsverfahren nach einem der Ansprüche 1 bis 8 umsetzt.

SEQUENCE OF 3 IMAGES
$J_{t-1}$, $J_t$, $J_{t+1}$ — 10

IN $J_t$ : REFERENCE BLOCK
$RB_t$ , $Mk_t$ — 20

IN $J_{t-1}$: SEARCH WINDOW $SW^c$
CANDIDATE BLOCKS $Mk_{t-1}$ — 31

NS $J_{t+1}$: SEARCH WINDOW $SW^A$
CANDIDATE BLOCKS $Mk_{t+1}$ — 32

} 30

$Mk_t$

$Mk_{t+1}$

$Mk_{t-1}$

| SIMILARITY CRITERION CAUSAL — 41 | SIMILARITY CRITERION DOUBLE — 42 |

} 40

$V_o$

$V_{DLP} = V_t$

m → TEST $Lp(V_o) < m \ Lp(V_t)$ ? — 50

YES — 61

62 — NO

} 60

$V_{ADLp} = V_o$ — 71

72 — $V_{ADLp} = V_t$

} 70

FIG.1

FIG.2

FIG.4

EP 0 936 575 B1

FIG.3A

FIG.3B

FIG.8

HB$_{t+1}$  SW$_{t+1}$  Mk$_{t+1}$

J$_{t+1}$

RB$_t$[NG(x,y)]

Mk$_t$

J$_t$

HB$_{t-1}$

Mk$_{t-1}$

J$_{t-1}$

SW$_{t1}$

FIG.5A

$\overrightarrow{V(t,t+1)}$Mk$_{t+1}$

Mk

J$_t$

Mk$_{t-1}$

$\overrightarrow{V(t,t-1)}$

FIG.5B

A$_t$, A$_{t-1}$, A$_{t+1}$

J$_t$, J$_{t-1}$, J$_{t+1}$

A'$_t$, A'$_{t-1}$, A'$_{t+1}$

J'$_t$, J'$_{t-1}$, J'$_{t+1}$

A''$_t$, A''$_{t-1}$, A''$_{t+1}$

J''$_t$, J''$_{t-1}$, J''$_{t+1}$

FIG.6

FIG.7A

FIG.7B

FIG.7C

FIG.7D